# FASCICULE DE BREVET EUROPEEN

(11) **EP 2 048 397 B1**
(45) Date de publication et mention de la délivrance du brevet: **31.07.2013**
(21) Numéro de dépôt: 08165767.8
(22) Date de dépôt: 02.10.2008
(51) Int. Cl.: F16D 13/58

(54) **Mécanisme d'embrayage, notamment de véhicule automobile, à assistance perfectionnée à l'embrayage**
Kupplungsmechanismus, insbesondere für Kraftfahrzeug mit verbesserter Kupplungshilfe
Clutch mechanism, in particular for an automobile, with improved clutch assistance

(30) Priorité: 11.10.2007 FR 0758232
(43) Date de publication de la demande: 15.04.2009
(73) Titulaire: Valeo Embrayages, 80009 Amiens (FR)
(72) Inventeur: Osman, Hafiz, 80000 Amiens (FR); Bertin, Patrice, 95540 Mery-sur-Oise (FR); Graton, Michel, 75020 Paris (FR); Lecocq, Emmanuel, 80260 Naours (FR); Dhalleine, Christophe, 80800 Villers-Bretonneux (FR)

(56) Documents cités:
- EP-A2- 0 249 469
- WO-A-03/087606
- DE-A1- 4 311 286
- DE-A1- 19 547 559
- DE-U1- 29 508 091
- FR-A- 2 688 558
- FR-A- 2 745 868

## Description

La présente invention concerne le domaine des mécanismes d'embrayage, notamment de véhicule automobile.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe rotatif mené est généralement couplé à un arbre de boîte de vitesses.

L'embrayage comporte habituellement un mécanisme entraîné en rotation par l'organe menant. Ce mécanisme comprend un couvercle, un diaphragme et un plateau de pression, tous liés en rotation avec l'organe menant.

Afin de coupler les organes rotatifs menant et mené, le diaphragme enserre un disque de friction, lié en rotation avec l'organe rotatif mené, entre le plateau de pression et un plateau de réaction solidaire en rotation du couvercle.

Le diaphragme forme un levier comportant un axe d'articulation matérialisé par les première et seconde parties d'appui et d'articulation. Ainsi, dans le cas d'un mécanisme de type poussé, le diaphragme forme un levier du premier genre, c'est à dire un levier soumis à une force d'action et à une force de réaction, appliquées de part et d'autre de l'axe d'articulation. En revanche, dans le cas d'un mécanisme de type tiré, le diaphragme forme un levier du deuxième genre, c'est à dire un levier soumis à une force d'action et à une force de réaction, la force de réaction étant appliquée au levier entre son axe d'articulation et la zone d'application de la force d'action.

Le diaphragme est susceptible de basculer autour de l'axe d'articulation entre une position embrayée, vers laquelle ce diaphragme est rappelé élastiquement, et une position débrayée, vers laquelle ce diaphragme est déplacé par une butée de commande à l'encontre de sa force de rappel.

En position embrayée, le diaphragme est guidé en rotation par la première partie d'appui et d'articulation, et prend appui sur la seconde partie d'appui et d'articulation de manière à exercer une charge sur le plateau de pression.

En position débrayée, le diaphragme est guidé en rotation par la seconde partie d'appui et d'articulation, et prend appui sur la première partie d'appui et d'articulation de manière à annuler la charge exercée sur le plateau de pression.

On connaît déjà dans l'état de la technique, notamment d'après FR-A-2 709 337, un mécanisme pour embrayage, notamment de véhicule automobile. De manière classique, ce mécanisme comporte un couvercle, dans lequel est logé un diaphragme, articulé entre une position embrayée, dans laquelle le diaphragme exerce un effort sur un plateau de pression de façon à pincer un disque de friction entre ce plateau de pression et un plateau de réaction, et une position débrayée, dans laquelle le diaphragme est activé par une butée de commande de façon à relâcher le plateau de pression.

L'articulation du diaphragme est réalisée par pincement de ce diaphragme entre des première et seconde parties d'appui et d'articulation, portées respectivement par des premier et second organes d'articulation.

Afin d'assurer, après un débrayage, un retour optimal du diaphragme vers sa position embrayée, et cela tout au long de la durée de vie de ce diaphragme, un organe élastique d'assistance au basculement du diaphragme vers sa position embrayée est agencé en appui contre ce diaphragme.

Cet organe d'assistance permet également d'assurer que le diaphragme exerce un effort optimal sur le plateau de pression en position embrayée, et sur la butée de commande en position débrayée, tout au long de sa durée de vie.

Les organes d'articulation, le diaphragme et l'organe d'assistance sont empilés de façon à prendre appui axialement sur un organe de support porté par le couvercle.

Les deux organes d'articulation sont couplés en compression axiale avec l'organe d'assistance. En effet, une compression axiale exercée sur l'organe d'assistance est transmise à chacun des organes d'articulation. De ce fait, les éléments empilés frottent les uns contre les autres lorsque le diaphragme bascule, ces frottements pouvant provoquer une usure prématurée de certains de ces éléments.

En outre, dans certains cas, du fait de l'empilement précité, des dispersions de cotes peuvent mener à des difficultés dans l'assemblage du mécanisme.

L'invention a notamment pour but de remédier à ces inconvénients en fournissant un mécanisme simple à assembler et protégé contre une usure prématurée de ses éléments.

On connait également FR 2 745 868, considéré comme l'état de la technique le plus proche.

A cet effet, l'invention a pour objet un mécanisme pour embrayage, tel que décrit dans la revendication 1 ou la revendication 2.

De tels moyens d'immobilisation permettent de limiter le débattement axial de l'organe d'assistance, notamment dans le cas où un jeu existe entre l'organe d'assistance et le diaphragme. En effet, un tel débattement axial pourrait générer des bruits indésirables et/ou causer une usure prématurée de l'organe d'assistance.

On considère qu'un premier organe est découplé en compression axiale d'un second organe si une compression exercée sur le second organe n'est pas transmise au premier organe.

Grâce au découplage en compression axiale, on évite les frottements entre les organes d'articulation et d'assistance lorsque le diaphragme bascule entre ses positions embrayée et débrayée, ce qui réduit les risques d'usure prématurée.

Ce découplage peut être obtenu en évitant d'empiler les organes d'articulation et d'assistance. On évite ainsi les effets indésirables d'accumulation de dispersions de cotes d'éléments empilés.

Par ailleurs, puisque l'organe d'articulation et l'organe d'assistance prennent appui sur le même organe de support, le mécanisme nécessite peu de pièces pour sa fabrication, et est donc relativement simple à assembler.

Un mécanisme selon l'invention peut en outre comporter l'une ou plusieurs des caractéristiques suivantes :
- Les première et seconde butée axiales sont formées par deux parties décalées radialement d'un épaulement de l'organe de support.
- L'organe d'articulation entoure radialement l'organe d'assistance.
- Le diaphragme est pincé entre la première partie d'appui et d'articulation et une seconde partie d'appui et d'articulation portée par le couvercle, par exemple par un bossage annulaire ménagé sur le couvercle.
- Un jeu est prévu entre le diaphragme et l'organe d'assistance lorsque le diaphragme est en position embrayée.
- Le mécanisme comporte au moins trois, par exemple neuf, organes de support, répartis circonférentiellement sur le couvercle.
- Le diaphragme a une forme générale de rondelle Belleville, et comporte des doigts radiaux formant chacun un levier dont l'actionnement provoque la déformation du diaphragme lors de son basculement entre ses positions embrayée et débrayée.
- L'organe d'assistance a une forme générale de rondelle Belleville et comporte des pattes sensiblement radiales courtes et longues munies chacune d'une extrémité libre, les extrémités libres des pattes longues étant décalées radialement vers l'axe du mécanisme par rapport aux extrémités libres des pattes courtes, les pattes courtes et longues étant agencées de façon que, lorsque le diaphragme bascule vers sa position débrayée, les extrémités libres des pattes longues coopèrent avec le diaphragme avant les extrémités libres des pattes courtes.
- L'organe de support comporte un rivet, comprenant une tête formant l'épaulement de cet organe de support.
- Le mécanisme comporte un organe de limitation de frottement, intercalé entre l'organe d'assistance et le diaphragme, destiné à limiter les frottements entre cet organe d'assistance et ce diaphragme.
- Le mécanisme est du type poussé.
- Le mécanisme comporte un dispositif de rattrapage d'usure destiné à compenser l'usure d'un disque de friction de l'embrayage lorsque le mécanisme est agencé dans cet embrayage.

L'invention à également pour objet un embrayage, notamment de véhicule automobile, caractérisé en ce qu'il comporte un mécanisme tel que défini précédemment.

L'invention sera mieux comprise à la lecture de la description qui va suivre, donnée uniquement à titre d'exemple et faite en se référant aux dessins annexés dans lesquels :
- la figure 1 est une vue en coupe axiale d'un mécanisme;
- la figure 2 est une vue en perspective du mécanisme de la figure 1 ;
- la figure 3 est une vue en perspective d'un organe d'assistance du mécanisme de la figure 1 ;
- la figure 4 est une vue similaire à celle de la figure 1 d'un mécanisme;
- la figure 5 est une vue similaire à celle de la figure 1 d'un mécanisme selon un mode de réalisation de l'invention ;
- la figure 6 est une vue en perspective d'organes d'assistance et d'articulation du mécanisme de la figure 5 ;
- la figure 7 est une vue en perspective du mécanisme de la figure 5 ;
- la figure 8 est une vue en perspective d'un mécanisme;
- la figure 9 est une vue similaire à celle de la figure 6 d'organes d'assistance et d'articulation selon un mode alternatif de réalisation de l'invention ;
- la figure 10 est une vue similaire à celle de la figure 6 d'organes d'assistance et d'articulation.

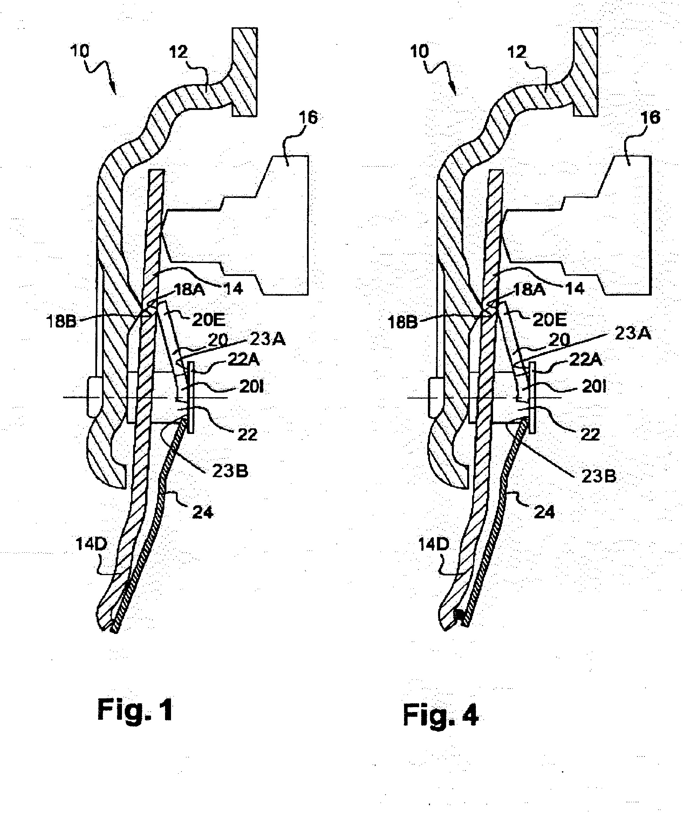

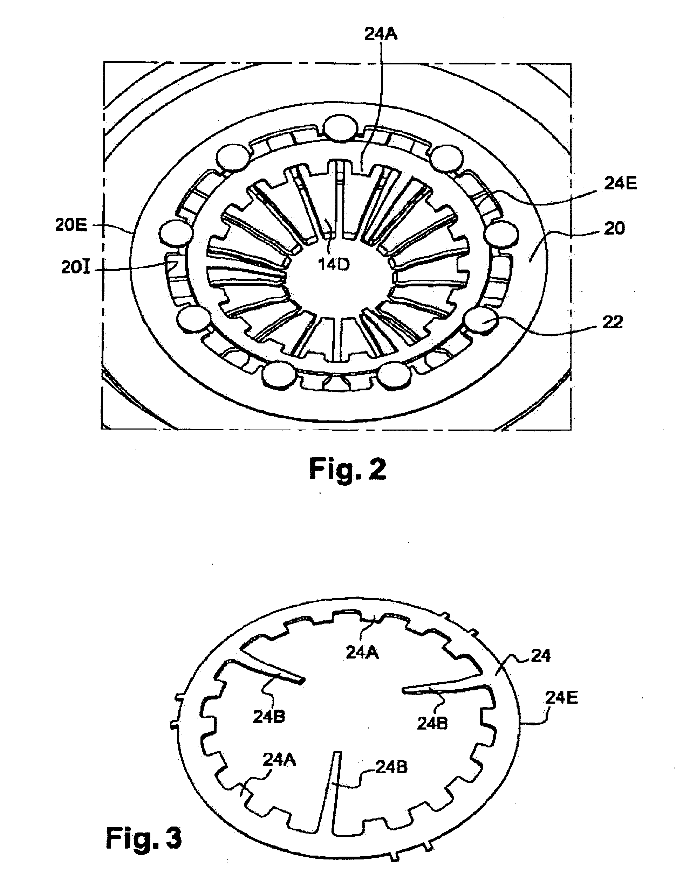

On a représenté sur les figures 1 et 2 un embrayage pour véhicule automobile. Cet embrayage comprend un mécanisme, désigné par la référence générale 10.

Le mécanisme 10 comporte un couvercle 12 de forme générale de révolution, destiné à être relié en rotation avec un volant moteur (non représenté) du véhicule automobile, à l'aide de moyens classiques. Un diaphragme 14, déformable élastiquement comme une rondelle Belleville, est logé dans le couvercle 12. Ce couvercle 12 et le diaphragme 14 sont sensiblement coaxiaux.

Le diaphragme 14 est muni de doigts radiaux 14D s'étendant vers l'axe du diaphragme. Ces doigts 14D sont repliés axialement de façon à conférer au diaphragme 14 sa forme de rondelle Belleville, ainsi que son élasticité.

Lorsque l'embrayage est assemblé sur le véhicule automobile, le diaphragme 14 est susceptible d'être actionné par une butée de commande (non représentée) et de coopérer avec un plateau de pression 16 logé dans le couvercle 12 et solidaire en rotation avec ce dernier.

Lorsque le diaphragme 14 est au repos, il exerce un effort sur le plateau de pression 16, de façon à enserrer un disque de friction (non représenté) entre ce plateau de pression 16 et un plateau de réaction (non représenté), couplant ainsi le disque de friction avec le mécanisme 10 (position embrayée).

Lorsque la butée de commande est actionnée, elle exerce un effort axial sur les doigts 14D du diaphragme 14, ce qui provoque la déformation élastique du diaphragme 14. Le diaphragme 14 pivote alors autour d'un axe d'articulation 18 en relâchant le plateau de pression 16, libérant ainsi le disque de friction (position débrayée).

L'axe d'articulation 18 du diaphragme 14 est matérialisé par des première 18A et seconde 18B parties d'appui et d'articulation, portées par le couvercle 12, entre lesquelles le diaphragme 14 est pincé.

Le diaphragme 14, notamment chacun de ses doigts 14D, forme alors un levier du premier genre, articulé autour de ces première 18A et seconde 18B parties d'appui et d'articulation.

La première partie d'appui et d'articulation 18A est portée par un organe d'articulation 20 de forme générale de révolution, déformable élastiquement comme une rondelle Belleville. L'organe d'articulation 20 comporte un contour intérieur 201 et un contour extérieur 20E. Le contour extérieur 20E prend appui axialement contre le diaphragme 14, formant ainsi la première partie d'appui et d'articulation 18A.

Le contour intérieur 201 de l'organe d'articulation 20 prend appui axialement sur au moins un organe de support 22 rapporté sur le couvercle 12, de préférence au moins trois, par exemple neuf organes de support 22, répartis circonférentiellement sur le couvercle 12.

Par exemple, chaque organe de support 22 comporte un rivet, muni d'une tête 22A formant un épaulement, comprenant une première butée axiale 23A, formée par une partie de cet épaulement, contre laquelle l'organe d'articulation 20 prend appui. Ainsi, l'organe d'articulation 20 est enserré axialement entre le diaphragme 14 et la première butée 23A.

Par ailleurs, la seconde partie d'appui et d'articulation 18B est formée par un bossage annulaire, continu ou non, ménagé sur le couvercle 12. En variante, la seconde partie d'appui et d'articulation pourrait être portée par un second organe d'articulation rapporté sur le couvercle 12.

Afin d'assister le basculement du diaphragme 14 vers sa position embrayée, le mécanisme 10 comporte un organe élastique d'assistance 24, de forme générale de révolution. Cet organe élastique d'assistance 24 prend également appui sur les organes de support 22.

En effet, chaque support 22 comporte une seconde butée axiale 23B, formée par une partie de l'épaulement 22A, décalée par radialement par rapport à la partie formant la première butée axiale 23A, contre laquelle l'organe d'assistance 24 prend appui.

L'organe d'assistance 24, représenté plus en détail sur la figure 3, est déformable élastiquement comme une rondelle Belleville.

L'organe d'assistance 24 comporte des pattes sensiblement radiales courtes 24A et des pattes sensiblement radiales longues 24B, par exemple trois pattes longues 24B. Chaque patte 24A, 24B est munie d'une extrémité libre, de sorte que les extrémités libres des pattes longues 24B sont décalées radialement vers l'axe du mécanisme par rapport aux extrémités libres des pattes courtes 24A.

Les pattes courtes 24A et longues 24B sont agencées de façon que, lorsque le diaphragme 14 bascule vers sa position débrayée, les extrémités libres des pattes longues 24B coopèrent avec les doigts 14D du diaphragme 14 avant les extrémités libres des pattes courtes 24A. L'organe d'assistance 24 exerce donc un effort progressif sur le diaphragme 14 lorsque celui-ci bascule vers sa position débrayée.

Dans l'exemple décrit, les pattes longues 24B coopèrent avec les doigts 14D du diaphragme 14 même lorsque celui-ci est en position embrayée, afin de l'assister dans l'effort d'embrayage.

En outre, les pattes longues 24B forment chacune une languette élastique d'immobilisation axiale, coopérant avec le diaphragme 14 de façon à immobiliser l'organe d'assistance 24 en appui sur la deuxième butée axiale 23B.

Ainsi, les languettes élastiques 24B et la deuxième butée axiale 23B forment ensemble des moyens élastiques 26 d'immobilisation axiale de l'organe d'assistance.

En variante, un jeu pourrait être prévu entre le diaphragme 14 et l'organe d'assistance 24 lorsque le diaphragme 14 est en position embrayée.

Comme cela est visible sur les figures 1 et 2, l'organe d'articulation 20 est découplé en compression axiale de la seconde butée axiale 23B, et l'organe d'assistance 24 est découplé en compression axiale de la première butée axiale 23A. Notamment, le diamètre du contour intérieur 201 de l'organe d'articulation 20 est supérieur au diamètre d'un contour extérieur 24E de l'organe d'assistance 24, de sorte que l'organe d'articulation 20 entoure radialement cet organe d'assistance 24. En d'autres termes, l'organe d'articulation 20 et l'organe d'assistance 24 sont agencés radialement de part et d'autre des organes de support 22.

Ainsi, ces organes d'articulation 20 et d'assistance 24 sont indépendants l'un de l'autre, et ne sont donc pas susceptibles de frotter l'un contre l'autre lorsque le diaphragme 14 bascule entre ses positions embrayée et débrayée.

En outre, les organes d'articulation 20 et d'assistance 24 ne sont pas empilés, limitant ainsi les risques de dispersions de cotes.

On a représenté sur la figure 4 un mécanisme 10 selon un deuxième mode de réalisation de l'invention. Sur cette figure, les éléments analogues à ceux des figures précédentes sont désignés par des références identiques.

Conformément à ce deuxième mode de réalisation, le mécanisme 10 comporte un organe annulaire 28 de limitation de frottement, intercalé entre l'organe d'assistance 24 et le diaphragme 14, de façon à limiter les frottements entre cet organe d'assistance 24 et ce diaphragme 14.

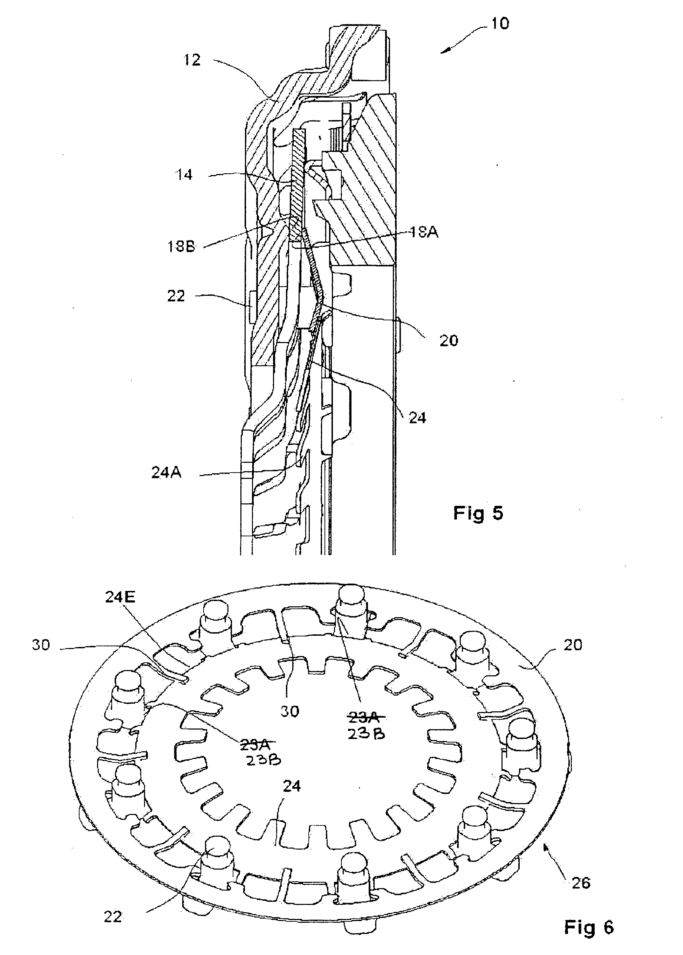

On a représenté sur les figures 5 à 7 un mécanisme 10 selon un troisième mode de réalisation de l'invention. Sur ces figures, les éléments analogues à ceux des figures précédentes sont désignés par des références identiques.

Conformément à ce troisième mode de réalisation, le mécanisme 10 comporte des moyens élastiques 26 d'immobilisation axiale de l'organe d'assistance 24.

Les moyens d'immobilisation 26 comprennent la deuxième butée axiale 23B et au moins une languette élastique 30 d'immobilisation axiale, ménagée sur le contour intérieur 201 de l'organe d'articulation 20, de sorte que l'organe d'assistance 24 est pincé entre la deuxième butée axiale 23B et la languette 30. Par exemple, l'organe d'articulation 20 comporte neuf languettes 30 réparties circonférentiellement sur son contour intérieur 201.

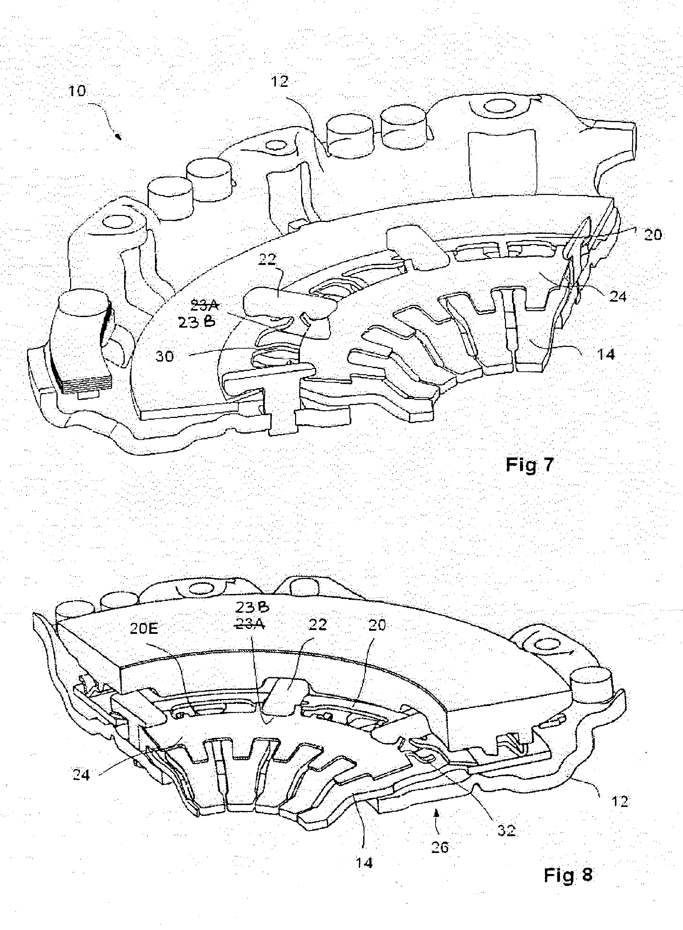

On a représenté sur la figure 8 un mécanisme 10 selon un quatrième mode de réalisation de l'invention. Sur cette figure, les éléments analogues à ceux des figures précédentes sont désignés par des références identiques.

Conformément à ce quatrième mode de réalisation, les moyens d'immobilisation 26 comportent au moins une languette élastique 32 d'immobilisation axiale, ménagée sur le contour externe 24E de l'organe d'assistance 24 et coopérant avec le diaphragme 14 de façon à immobiliser l'organe d'assistance 24 en appui sur la deuxième butée axiale 23B.

Par exemple, la languette 32 présente une forme courbe, telle qu'une première extrémité de la languette est liée au contour externe 24E de l'organe d'assistance 24, la forme courbe présentant un sommet coopérant avec le diaphragme 14. En variante, une seconde extrémité de la languette pourrait coopèrer avec l'organe d'articulation 20 de façon à prendre appui dessus

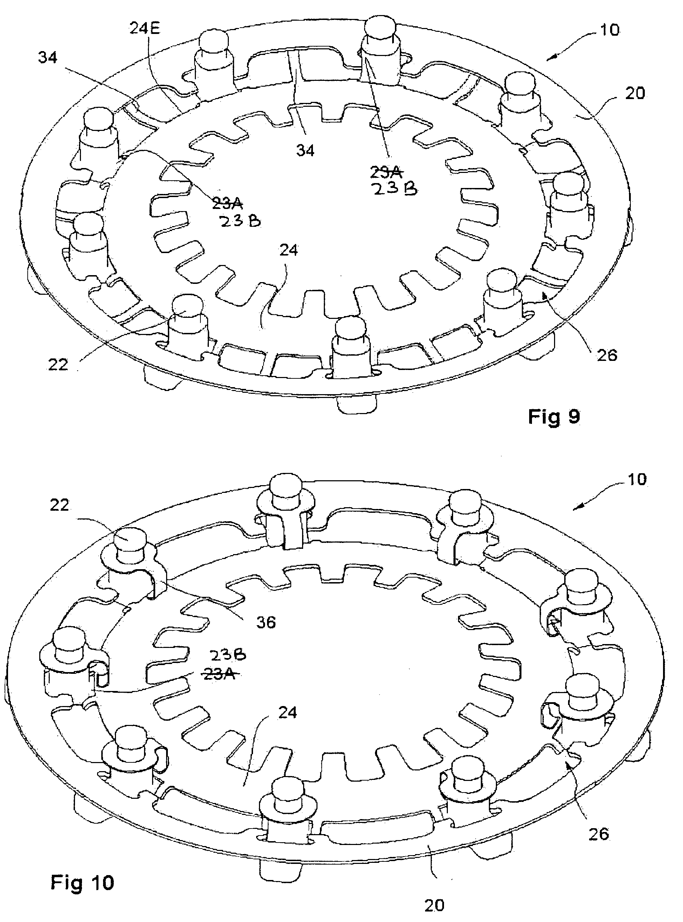

On a représenté sur la figure 9 un mécanisme 10 selon un cinquième mode de réalisation de l'invention. Sur cette figure 9, les éléments analogues à ceux des figures précédentes sont désignés par des références identiques.

Conformément à ce cinquième mode de réalisation, les moyens d'immobilisation 26 comportent au moins une languette élastique 34 d'immobilisation axiale, ménagée sur le contour externe 24E de l'organe d'assistance 24 et coopérant avec l'organe d'articulation 20 de façon à immobiliser l'organe d'assistance 24 en appui sur la deuxième butée axiale 23B.

On a représenté sur la figure 10 un mécanisme 10 selon un sixième mode de réalisation de l'invention. Sur cette figure 10, les éléments analogues à ceux des figures précédentes sont désignés par des références identiques.

Conformément à ce sixième mode de réalisation, les moyens d'immobilisation 26 comportent au moins une languette élastique 36 d'immobilisation axiale, portée par un organe de support 22, et coopérant avec l'organe d'assistance 24 de façon à l'immobiliser en appui sur la deuxième butée axiale 23B. L'organe d'assistance 24 est donc pincé entre la languette élastique 36 et la deuxième butée axiale 23B.

On notera enfin que l'invention n'est pas limitée aux modes de réalisation précédemment décrits.

En effet, en variante, l'organe d'assistance 24 pourrait entourer l'organe d'articulation 20. Dans ce cas, l'organe d'assistance 24 comporterait des pattes radiales extérieures, faisant saillie du contour extérieur de cet organe d'assistance 24.

Par ailleurs, on notera que l'invention est particulièrement avantageuse dans le cas d'un mécanisme 10 comportant un dispositif de rattrapage d'usure, destiné à compenser l'usure d'un disque de friction de l'embrayage.

## Revendications

1. Mécanisme (10) pour embrayage, notamment de véhicule automobile, comportant :
- un couvercle (12), dans lequel est logé un diaphragme (14), articulé entre une position embrayée et une position débrayée,
- un organe d'articulation (20), de forme générale de révolution, comportant une première partie (18A) d'appui et d'articulation du diaphragme (14),
- un organe élastique (24) d'assistance au basculement du diaphragme (14) vers sa position embrayée, de forme générale de révolution,
- au moins un organe de support (22), porté par le couvercle (12), l'organe d'articulation (20) et l'organe d'assistance (24) prenant appui axialement sur cet organe de support,
dans lequel l'organe d'articulation (20) a une forme de rondelle Belleville, et dans lequel l'organe d'articulation (20) et l'organe d'assistance (24) prennent appui axialement respectivement sur des première (23A) et seconde (23B) butées axiales de l'organe de support (22), telles que l'organe d'articulation (20) soit découplé en compression axiale de la seconde butée axiale (23B), et l'organe d'assistance (24) soit découplé en compression axiale de la première butée axiale (23A), ledit mécanisme étant **caractérisé en ce qu'**il comporte des moyens élastiques (26) d'immobilisation axiale de l'organe d'assistance (24), lesdits moyens d'immobilisation (26) comprenant la deuxième butée axiale (23B) et une languette élastique (30) d'immobilisation axiale, reliée à l'organe d'articulation (20), l'organe d'assistance (24) étant pincé entre la deuxième butée axiale (23B) et la languette (30).

2. Mécanisme (10) pour embrayage, notamment de véhicule automobile, comportant :
- un couvercle (12), dans lequel est logé un diaphragme (14), articulé entre une position embrayée et une position débrayée,
- un organe d'articulation (20), de forme générale de révolution, comportant une première partie (18A) d'appui et d'articulation du diaphragme (14),
- un organe élastique (24) d'assistance au basculement du diaphragme (14) vers sa position embrayée, de forme générale de révolution,
- au moins un organe de support (22), porté par le couvercle (12), l'organe d'articulation (20) et l'organe d'assistance (24) prenant appui axialement sur cet organe de support,
dans lequel l'organe d'articulation (20) a une forme de rondelle Belleville, et dans lequel l'organe d'articulation (20) et l'organe d'assistance (24) prennent appui axialement respectivement sur des première (23A) et seconde (23B) butées axiales de l'organe de support (22), telles que l'organe d'articulation (20) soit découplé en compression axiale de la seconde butée axiale (23B), et l'organe d'assistance (24) soit découplé en compression axiale de la première butée axiale (23A), ledit mécanisme étant **caractérisé en ce qu'**il comporte des moyens élastiques (26) d'immobilisation axiale de l'organe d'assistance (24), lesdits moyens d'immobilisation (26) comprenant la deuxième butée axiale (23B) et une languette élastique (34) d'immobilisation axiale, reliée à l'organe d'assistance (24) et coopérant avec l'organe d'articulation (20) de façon à immobiliser l'organe d'assistance (24) en appui sur la deuxième butée axiale (23B).

3. Mécanisme (10) selon la revendication 1 ou 2, dans lequel les première (23A) et seconde (23B) butée axiales sont formées par deux parties décalées radialement d'un épaulement (22A) de l'organe de support (22).

4. Mécanisme (10) selon l'une des revendications 1 à 3, dans lequel l'organe d'articulation (20) entoure radialement l'organe d'assistance (24).

5. Mécanisme (10) selon l'une quelconque des revendications précédentes, dans lequel le diaphragme (14) est pincé entre la première partie d'appui et d'articulation (18A) et une seconde partie d'appui et d'articulation (18B) portée par le couvercle (12), par exemple par un bossage annulaire ménagé sur le couvercle (12).

6. Mécanisme (10) selon l'une quelconque des revendications précédentes, dans lequel un jeu est prévu entre le diaphragme (14) et l'organe d'assistance (24) lorsque le diaphragme (14) est en position embrayée.

7. Mécanisme (10) selon l'une quelconque des revendications précédentes, comportant au moins trois, par exemple neuf, organes de support (22), répartis circonférentiellement sur le couvercle (12).

8. Mécanisme (10) selon l'une quelconque des revendications précédentes, dans lequel le diaphragme (14) a une forme générale de rondelle Belleville, et comporte des doigts radiaux (14D) formant chacun un levier dont l'actionnement provoque la déformation du diaphragme (14) lors de son basculement entre ses positions embrayée et débrayée.

9. Mécanisme (10) selon la revendication 8, dans lequel l'organe d'assistance (24) comporte des pattes sensiblement radiales courtes (24A) et longues (24B) munies chacune d'une extrémité libre, les extrémités libres des pattes longues (24B) étant décalées radialement vers l'axe du mécanisme par rapport aux extrémités libres des pattes courtes (24A), les pattes courtes (24A) et longues (24B) étant agencées de façon que, lorsque le diaphragme (14) bascule vers sa position débrayée, les extrémités libres des pattes longues (24B) coopèrent avec le diaphragme (14) avant les extrémités libres des pattes courtes (24A).

10. Mécanisme (10) selon l'une quelconque des revendications précédentes, dans lequel l'organe d'assistance (24) a une forme générale de rondelle Belleville.

11. Mécanisme (10) selon l'une quelconque des revendications précédentes, dans lequel l'organe de support (22) comporte un rivet, comprenant une tête formant l'épaulement (22A) de cet organe de support (22).

12. Mécanisme (10) selon l'une quelconque des revendications précédentes, comportant un organe de limitation de frottement, intercalé entre l'organe d'assistance (24) et le diaphragme (14), destiné à limiter les frottements entre cet organe d'assistance (24) et ce diaphragme (14).

13. Mécanisme (10) selon l'une quelconque des revendications précédentes, ce mécanisme (10) étant du type poussé.

14. Mécanisme (10) selon l'une quelconque des revendications précédentes, comportant un dispositif de rattrapage d'usure destiné à compenser l'usure d'un disque de friction de l'embrayage lorsque le mécanisme (10) est agencé dans cet embrayage.

15. Embrayage, notamment de véhicule automobile, **caractérisé en ce qu'**il comporte un mécanisme (10) selon l'une quelconque des revendications précédentes.

## Patentansprüche

1. Mechanismus (10) für eine Kupplung, insbesondere für Kraftfahrzeuge, umfassend:
- einen Deckel (12), in dem eine Membranfeder (14) untergebracht ist, die zwischen einer Einkuppelposition und einer Auskuppelposition angelenkt ist,
- ein Gelenkorgan (20) mit umlaufender Grundform, welches einen ersten Teil (18A) zur Auflage und zum Anlenken der Membranfeder (14) umfasst,
- ein elastisches Organ (24) mit umlaufender Grundform zur Unterstützung des Schwenkens der Membranfeder (14) in ihre Einkuppelposition,
- mindestens ein vom Deckel (12) getragenes Auflagerorgan (22), wobei das Gelenkorgan (20) und das Unterstützungsorgan (24) axial auf diesem Auflagerorgan aufliegen,
wobei das Gelenkorgan (20) die Form einer Tellerfeder hat, und wobei das Gelenkorgan (20) und das Unterstützungsorgan (24) axial jeweils auf ersten (23A) und zweiten (23B) axialen Anschlägen des Auflagerorgans (22) aufliegen, derart dass das Gelenkorgan (20) bei axialer Kompression von dem zweiten axialen Anschlag (23B) entkoppelt ist und das Unterstützungsorgan (24) bei axialer Kompression von dem ersten axialen Anschlag (23A) entkoppelt ist, wobei der besagte Mechanismus **dadurch gekennzeichnet ist, dass** er elastische Mittel (26) zur axialen Festlegung des Unterstützungsorgans (24) umfasst, wobei die besagten Festlegungsmittel (26) den zweiten axialen Anschlag (23B) und eine elastische Zunge (30) zur axialen Festlegung enthalten, die mit dem Gelenkorgan (20) verbunden ist, wobei das Unterstützungsorgan (24) zwischen dem zweiten axialen Anschlag (23B) und der Zunge (30) eingeklemmt ist.

2. Mechanismus (10) für eine Kupplung, insbesondere für Kraftfahrzeuge, umfassend:
- einen Deckel (12), in dem eine Membranfeder (14) untergebracht ist, die zwischen einer Einkuppelposition und einer Auskuppelposition angelenkt ist,
- ein Gelenkorgan (20) mit umlaufender Grundform, welches einen ersten Teil (18A) zur Auflage und zum Anlenken der Membranfeder (14) umfasst,
- ein elastisches Organ (24) mit umlaufender Grundform zur Unterstützung des Schwenkens der Membranfeder (14) in ihre Einkuppelposition,
- mindestens ein vom Deckel (12) getragenes Auflagerorgan (22), wobei das Gelenkorgan (20) und das Unterstützungsorgan (24) axial auf diesem Auflagerorgan aufliegen,
wobei das Gelenkorgan (20) die Form einer Tellerfeder hat, und wobei das Gelenkorgan (20) und das Unterstützungsorgan (24) axial jeweils auf ersten (23A) und zweiten (23B) axialen Anschlägen des Auflagerorgans (22) aufliegen, derart dass das Gelenkorgan (20) bei axialer Kompression von dem zweiten axialen Anschlag (23B) entkoppelt ist und das Unterstützungsorgan (24) bei axialer Kompression von dem ersten axialen Anschlag (23A) entkoppelt ist, wobei der besagte Mechanismus **dadurch gekennzeichnet ist, dass** er elastische Mittel (26) zur axialen Festlegung des Unterstützungsorgans (24) umfasst, wobei die besagten Festlegungsmittel (26) den zweiten axialen Anschlag (23B) und eine elastische Zunge (34) zur axialen Festlegung enthalten, die mit dem Unterstützungsorgan (24) verbunden ist und mit dem Gelenkorgan (20) zusammenwirkt, um das Unterstützungsorgan (24) in Auflage auf dem zweiten axialen Anschlag (23B) festzulegen.

3. Mechanismus (10) nach Anspruch 1 oder 2, wobei der erste (23A) und zweite (23B) axiale Anschlag durch zwei radial versetzte Teile eines Ansatzes (22A) des Auflagerorgans (22) gebildet sind.

4. Mechanismus (10) nach einem der Ansprüche 1 bis 3, wobei das Gelenkorgan (20) das Unterstützungsorgan (24) radial umgibt.

5. Mechanismus (10) nach einem der vorherigen Ansprüche, wobei die Membranfeder (14) zwischen dem ersten Teil zur Auflage und zum Anlenken (18A) und einem von dem Deckel (12) getragenen zweiten Teil zur Auflage und zum Anlenken (18B), beispielsweise einem in den Deckel (12) eingebrachten ringförmigen Buckel, eingeklemmt ist.

6. Mechanismus (10) nach einem der vorherigen Ansprüche, wobei zwischen der Membranfeder (14) und dem Unterstützungsorgan (24) ein Spiel vorgesehen ist, wenn die Membranfeder (14) in der Einkuppelposition ist.

7. Mechanismus (10) nach einem der vorherigen Ansprüche, umfassend mindestens drei, beispielsweise neun, umfangsmäßig über den Deckel (12) verteilte Auflagerorgane (22).

8. Mechanismus (10) nach einem der vorherigen Ansprüche, wobei die Membranfeder (14) eine Grundform einer Tellerfeder hat und radiale Finger (14D) aufweist, die jeder einen Hebel bilden, dessen Betätigung die Verformung der Membranfeder (14) bei ihrem Umschwenken zwischen ihrer Einkuppelposition und Auskuppelposition hervorruft.

9. Mechanismus (10) nach Anspruch 8, wobei das Unterstützungsorgan (24) in etwa radiale kurze (24A) und lange (24B) Laschen umfasst, die jede mit einem freien Ende versehen sind, wobei die freien Enden der langen Laschen (24B) im Verhältnis zu den freien Enden der kurzen Laschen (24A) radial zur Achse des Mechanismus hin versetzt sind, wobei die kurzen (24A) und langen (24B) Laschen derart angeordnet sind, dass die freien Enden der langen Laschen (24B) vor den freien Enden der kurzen Laschen (24A) mit der Membranfeder (14) zusammenwirken, wenn die Membranfeder (14) in ihre Auskuppelposition umschwenkt.

10. Mechanismus (10) nach einem der vorherigen Ansprüche, wobei das Unterstützungsorgan (24) eine Grundform einer Tellerfeder hat.

11. Mechanismus (10) nach einem der vorherigen Ansprüche, wobei das Auflagerorgan (22) einen Niet umfasst, der einen Kopf aufweist, welcher den Ansatz (22A) dieses Auflagerorgans (22) bildet.

12. Mechanismus (10) nach einem der vorherigen Ansprüche, umfassend ein zwischen das Unterstützungsorgan (24) und die Membranfeder (14) zwischengeschaltetes Organ zur Begrenzung der Reibung, das dazu bestimmt ist, die Reibungen zwischen dem Unterstützungsorgan (24) und der Membranfeder (14) zu begrenzen.

13. Mechanismus (10) nach einem der vorherigen Ansprüche, wobei dieser Mechanismus (10) von der gedrückten Art ist.

14. Mechanismus (10) nach einem der vorherigen Ansprüche, umfassend eine Vorrichtung zum Ausgleichen von Verschleiß, die dazu bestimmt ist, den Verschleiß einer Reibungsscheibe der Kupplung zu kompensieren, wenn der Mechanismus (10) in dieser Kupplung angeordnet ist.

15. Kupplung, insbesondere für Kraftfahrzeuge, **dadurch gekennzeichnet, dass** sie einen Mechanismus (10) nach einem der vorherigen Ansprüche umfasst.

## Claims

1. Mechanism (10) for a clutch, in particular for a motor vehicle, comprising:
- a cover (12), in which there is accommodated a diaphragm (14), articulated between an engaged position and a disengaged position;
- an articulation unit (20), with a form generally of revolution, comprising a first part (18A) for support and articulation of the diaphragm (14);
- a resilient unit (24) for assistance in pivoting the diaphragm (14) towards its engaged position, with a form generally of revolution;
- at least one support unit (22), which is supported by the cover (12), the articulation unit (20) and the assistance unit (24) being supported axially on this support unit,
wherein the articulation unit (20) is in the form of a Belleville washer, and wherein the articulation unit (20) and the assistance unit (24) are supported axially respectively on first (23A) and second (23B) axial stops of the support unit (22), such that the articulation unit (20) is decoupled in axial compression from the second axial stop (23B), and the assistance unit (24) is decoupled in axial compression from the first axial stop (23A), the said mechanism being **characterised in that** it comprises resilient means (26) for axial immobilisation of the assistance unit (24), the said immobilisation means (26) comprising the second axial stop (23B), and a resilient tongue (30) for axial immobilisation which is connected to the articulation unit (20), the assistance unit (24) being gripped between the second axial stop (23B) and the tongue (30).

2. Mechanism (10) for a clutch, in particular for a motor vehicle, comprising:
- a cover (12), in which there is accommodated a diaphragm (14), articulated between an engaged position and a disengaged position;
- an articulation unit (20), with a form generally of revolution, comprising a first part (18A) for support and articulation of the diaphragm (14);
- a resilient unit (24) for assistance in pivoting the diaphragm (14) towards its engaged position, with a form generally of revolution;
- at least one support unit (22), which is supported by the cover (12), the articulation unit (20) and the assistance unit (24) being supported axially on this support unit,
wherein the articulation unit (20) is in the form of a Belleville washer, and wherein the articulation unit (20) and the assistance unit (24) are supported axially respectively on first (23A) and second (23B) axial stops of the support unit (22), such that the articulation unit (20) is decoupled in axial compression from the second axial stop (23B), and the assistance unit (24) is decoupled in axial compression from the first axial stop (23A), the said mechanism being **characterised in that** it comprises resilient means (26) for axial immobilisation of the assistance unit (24), the said immobilisation means (26) comprising the second axial stop (23B) and a resilient tongue (34) for axial immobilisation which is connected to the assistance unit (24) and co-operating with the articulation unit (20) such as to immobilise the assistance unit (24) which is supported on the second axial stop (23B).

3. Mechanism (10) according to claim 1 or 2, wherein the first (23A) and second (23B) axial stops are formed by two parts which are offset radially of a shoulder (22A) of the support unit (22).

4. Mechanism (10) according to one of claims 1 to 3, wherein the articulation unit (20) surrounds the assistance unit (24) radially.

5. Mechanism (10) according to any one of the preceding claims, wherein the diaphragm (14) is gripped between the first part (18A) for support and articulation, and a second part (18B) for support and articulation which is supported by the cover (12), for example by an annular boss provided on the cover (12).

6. Mechanism (10) according to any one of the preceding claims, wherein clearance is provided between the diaphragm (14) and the assistance unit (24) when the diaphragm (14) is in the engaged position.

7. Mechanism (10) according to any one of the preceding claims, comprising at least three, for example nine, support units (22) which are distributed circumferentially on the cover (12).

8. Mechanism (10) according to any one of the preceding claims, wherein the diaphragm (14) is in the form generally of a Belleville washer, and comprises radial fingers (14D) each forming a lever, the actuation of which gives rise to the deformation of the diaphragm (14) during the pivoting between its engaged and disengaged positions.

9. Mechanism (10) according to claim 8, wherein the assistance unit (24) comprises substantially radial short (24A) and long (24B) legs which are each provided with a free end, the free ends of the long legs (24B) being offset radially towards the axis of the mechanism relative to the free ends of the short legs (24A), the short (24A) and long (24B) legs being arranged such that, when the diaphragm (14) pivots towards its disengaged position, the free ends of the long legs (24B) co-operate with the diaphragm (14) before the free ends of the short legs (24A).

10. Mechanism (10) according to any one of the preceding claims, wherein the assistance unit (24) is in the form generally of a Belleville washer.

11. Mechanism (10) according to any one of the preceding claims, wherein the support unit (22) comprises a rivet, comprising a head which forms the shoulder (22A) of this support unit (22).

12. Mechanism (10) according to any one of the preceding claims, comprising a friction limitation unit which is interposed between the assistance unit (24) and the diaphragm (14), and is designed to limit the friction between this assistance unit (24) and this diaphragm (14).

13. Mechanism (10) according to any one of the preceding claims, this mechanism (10) being of a push type.

14. Mechanism (10) according to any one of the preceding claims, comprising a wear compensation device designed to compensate the wear of a friction disc of the clutch when the mechanism (10) is arranged in this clutch.

15. Clutch, in particular for a motor vehicle, **characterised in that** it comprises a mechanism (10) according to any one of the preceding claims.
